# EUROPÄISCHE PATENTSCHRIFT

(11) **EP 1 910 806 B1**
(45) Veröffentlichungstag und Bekanntmachung des Hinweises auf die Patenterteilung: **02.01.2013**
(21) Anmeldenummer: 06762477.5
(22) Anmeldetag: 07.07.2006
(51) Int. Cl.: G01N 1/28, G01N 21/45, G03H 1/00

(54) **Verfahren und Vorrichtung zur Analyse von biologischen Objekten**
Method and device for analysing biological objects
Procede et dispositif d'analyse d'objets biologiques

(30) Priorität: 29.07.2005 DE 102005036326
(43) Veröffentlichungstag der Anmeldung: 16.04.2008
(73) Patentinhaber: Carl Zeiss Microscopy GmbH, 07745 Jena (DE)
(72) Erfinder: SCHÜTZE, Karin, 82327 Tutzing (DE); STICH, Monika, 81249 München (DE); KEMPER, Björn, 49086 Osnabrück (DE); CARL, Daniel, 79312 Emmendingen (DE); VON BALLY, Gert, 48161 Münster (DE); BUCHSTALLER-FENCL, Andrea, 81377 München (DE)
(74) Vertreter: Banzer, Hans-Jörg
(86) Internationale Anmeldenummer: PCT/EP2006/006667
(87) Internationale Veröffentlichungsnummer: WO 2007/014622

(56) Entgegenhaltungen:
- KEMPER B ET AL: "Holographic interferometric microscopy systems for the application on biological samples" PROC. OF SPIE, Bd. 5457, 2004, Seiten 581-588, XP002399968 Bellingham, WA, USA
- CARL D ET AL: "Parameter-optimized digital holographic microscope for high-resolution living-cell analysis" APPLIED OPTICS, OSA, OPTICAL SOCIETY OF AMERICA, WASHINGTON, DC, US, Bd. 43, Nr. 36, 20. Dezember 2004 (2004-12-20), Seiten 6536-6544, XP002364433 ISSN: 0003-6935
- STREHLE M UND POPP J: "Forschungsverband Biophotonik - Know-how für biologische und medizinische Lösungsansätze" LABORWELT, Bd. 4, Nr. 5, 2003, Seiten 30-34, XP002399969

## Beschreibung

Die vorliegende Erfindung betrifft ein Verfahren und eine Vorrichtung zur Analyse von biologischen Objekten, z.B. einzelnen Zellen, wobei die Erfindung in Verbindung mit einem berührungslosen Laser-Mikromanipulationsverfahren oder Laser-Mikrodissektionsverfahren zur Bearbeitung von biologischen Objekten mittels Laserbestrahlung eingesetzt wird.

Laser-Mikromanipulationsverfahren zur Mikromanipulation von biologischen Objekten sind inzwischen weitläufig bekannt. Dabei werden fokussierte Laserstrahlen zur Mikromanipulation von Zellen oder subzellulären Partikeln eingesetzt. Mit einem Laser-Mikrostrahl können beispielsweise Mikroläsionen in und an lebende Zellen gesetzt werden, um zelluläre Reaktionen zu testen oder um genetisches Material bzw. Wirkstoffe in eine Zelle zu bringen. Zu Mikro-Manipulationsverfahren gehören auch die so genannten Optischen Pinzetten ("Optical Tweezer"), welche auch als Optische Fallen ("Optical Traps") bezeichnet werden, bei denen mit Hilfe von Laserstrahlen Zellen mittels Gradientenkräften gezielt im Fokus der Laserstrahlen gefangen und zusammen mit den Laserstrahlen bewegt, d.h. positioniert, werden können. Ebenso ist mit Hilfe von derartigen Optischen Pinzetten auch ein Dehnen, Strecken oder Drehen der gefangenen Zellen möglich. Einzelheiten von Optischen Pinzetten sowie ein beispielhafter Aufbau für eine entsprechende Laser-Mikromanipulationsvorrichtung sind in dem europäischen Patent EP 0 679 B1 der Anmelderin beschrieben.

Laser-Mikrodissektionsverfahren dienen hingegen zur Separierung bzw. Isolierung und Gewinnung einzelner biologischer Objekte, z.B. einzelner Zellen oder Zellarealen, aus einem biologischen Präparat. Hierbei werden mit Hilfe eines Laserstrahls zuvor selektierte biologische Objekte aus einem biologischen Material ausgeschnitten und somit freipräpariert. Durch Setzen eines einzelnen Laser-Schusses oder Laser-Impulses auf ein gewünschtes Objekt kann dieses gezielt und berührungslos zu einem Auffangbehälter transportiert werden. Nachdem der Transportvorgang schleuderartig erfolgt, ist dieses von der Anmelderin entwickelte Verfahren auch als Laser-Katapultierverfahren ("Laser Pressure Catapulting") bekannt, wobei bei entsprechender Wahl der Laserparameter und des Präparats selektierte biologische Objekte auch unmittelbar aus dem umgebenden biologischen Material ohne vorhergehenden Schneidevorgang herauskatapultiert werden können. Dieses Laser-Katapultierverfahren ist beispielsweise in dem europäischen Patent EP 0 879 408 B1 der Anmelderin beschrieben.

Den zuvor beschriebenen Verfahren ist gemeinsam, dass ein starkes Bedürfnis nach einer möglichst automatischen Durchführung der Verfahren besteht, um entsprechend den Durchsatz bei der Verarbeitung der biologischen Objekte zu erhöhen. Dabei stellt jedoch die Analyse der biologischen Objekte ein Problem dar, da eine automatische Erkennung der gewünschten biologischen Objekte häufig nicht oder nur mit großen Aufwand möglich ist. Die bei den herkömmlichen Verfahren zum Einsatz kommenden Bildgebungsverfahren, welche Grundlage für die gezielte Auswahl einzelner Zellen und deren nachfolgende Verarbeitung bzw. Analyse sind, ermöglichen darüber hinaus häufig nur mit erheblichem Aufwand eine Wiedergabe eines Abbilds des biologischen Materials auf einem Bildschirm und erfordern des Weiteren häufig einen Scannen, d.h. Abtasten des biologischen Materials, was einerseits die biologischen Eigenschaften des biologischen Materials beeinträchtigen kann und anderseits zeitaufwändig ist. Zudem sind mit üblichen Bildanalyseverfahren bisher nur zweidimensionale Darstellungen der biologischen Objekte möglich.

Aus den Druckschriften Kemper B. et al., "Holographic interferometric microscopy systems for the application on biological samples", Proc. of SPIE, Vol. 5457, S. 581- 588, 2004, Carl D. et al., "Parameter-optimized digital holographic microscope for high-resolution living-cell analysis", Applied Optics, Vol. 43, Nr. 36, S. 6536-6544 und Strehle M. und Popp J., "Forschungsverband Biophotonik - Know-how für biologische und medizinische Lösungsansätze", Laborwelt, 4. Jahrgang, Nr. 5, S. 30- 34, 2003 ist der Einsatz der digitalen holographischen Mikrointerferometrie (DHMI) zur Analyse von biologischen Objekten bekannt. Insbesondere wird in diesen Druckschriften vorgeschlagen, durch Einsatz der DHMI eine hochauflösende Amplituden- und Phasenkontrastmikroskopie durch Erfassung von optischen Pfadlängenverlängerungen zu ermöglichen, um auf Grundlage der somit gewonnen Amplituden- und Phaseninformation eine quantitative Aussage über Formveränderungen, Mikrobewegungen, oder Prägungsindexveränderungen des jeweils analysierten biologischen Objekts treffen zu können.

Strehle und lopp offenbaren außerdem die Kopplung der DHMI mit einem Lasermikromanipulator mit dem Ziel, die nach der mikrointerferometrischen Analyse selektrierten Zellen zu isolieren und auschließend weiteren molekularbiologischen Untersuchungen zuzuführen.

Der vorliegenden Erfindung liegt die Aufgabe zugrunde, ein Verfahren und eine Vorrichtung zur Analyse von biologischen Objekten vorzuschlagen, wobei eine einfache, schnelle, genaue und kostengünstige Analyse von einzelnen biologischen Objekten möglich ist. Insbesondere liegt der Erfindung die Aufgabe zugrunde, ein einfaches und berührungsloses Erkennen und/oder Bearbeiten einzelner biologischer Objekte zu ermöglichen.

Diese Aufgabe wird erfindungsgemäß durch ein Verfahren zur Analyse biologischer Objekte mit den Merkmalen des Anspruches 1 bzw. eine entsprechend ausgestaltete Vorrichtung mit den Merkmalen des Anspruches 15 gelöst. Die Unteransprüche definieren jeweils bevorzugte und vorteilhafte Ausführungsformen der Erfindung. Erfindungsgemäß wird zur Analyse von biologischen Objekten ein digitales holographisches Mikrointerferometrieverfahren eingesetzt, um von einem entsprechenden biologischen Material ein Bild aufzunehmen und wiederzugeben.

Interferometrisches Messverfahren sind etablierte Standardverfahren zur zerstörungsfreien Werkstoffprüfung und haben sich bereits in vielen industriellen Anwendungsbereichen bewährt. Im Rahmen der vorliegenden Erfindung wird nun vorgeschlagen, die so genannte digitale holographische Mikrointerferometrie (DHMI) zur Analyse von biologischen Objekten einzusetzen. Die DHMI ermöglicht eine berührungslose, zerstörungsfreie und markerfreie Bildgebung, wobei insbesondere kein Scannen des biologischen Materials notwendig ist und die DHMI zur Online-Analyse bzw. Online-Kontrolle eingesetzt werden kann, d.h. es kann z.B. während eines laufenden Mikroinjektionsvorgangs eine Prozesskontrolle durchgeführt werden. In Kombination mit einer geeigneten Rekonstruktions- und Auswertungssoftware ermöglicht die DHMI zudem eine dreidimensionale Bildgebung, welche neben qualitativen Aussagen insbesondere auch quantitative Aussagen durch Auswertung des mittels der DHMI erzeugten Abbildung des biologischen Materials erlaubt.

Die dreidimensionale Abbildung des biologischen Materials kann mit einem herkömmlichen DHMI-Modul einfach, kostengünstig und schnell (kein Scannen, online) erzeugt werden, wobei eine zuverlässige Analyse auch bei optischer Unschärfe des dabei zum Einsatz kommenden Mikroskopiesystems möglich ist, da eine Fokuskorrektur automatisch von dem entsprechenden System rechnergestützt durchgeführt werden kann.

Das mittels DHMI aufgenommene Bild des biologischen Materials eignet sich insbesondere zur automatischen und rechnergestützten Auswertung mit einer geeigneten Biltdanalysesoftware, um abhängig von vorgegebenen Entscheidungskriterien bestimmte biologische Objekte in dem biologischen Material zu erkennen, wobei dies vorteilhaft mit einem nachfolgenden Laser-Mikromanipulationsvorgang oder Laser-Mikrodissektionsvorgang kombiniert werden kann, um z.B. eine erkannte und demzufolge selektierte Zelle automatisch oder manuell einem Mikroinjektionsvorgang oder Mikrodissektionsvorgang zu unterziehen. Besonders vorteilhaft ist somit die Integration der DHMI in ein Laser-Mikromanipulationssystem, Laser-Mikroinjektionssystem oder ein Laser-Mikrodissektionssystem, da mittels der DHMI einzelne biologische Objekte, z.B. Zellen, in einem biologischen Material einfach erkannt und anschließend gezielt bearbeitet oder isoliert bzw. gewonnen werden können.

Die Eigenschaften der DHMI erlauben eine weitgehende Automatisierung des Analyse- und Suchvorgangs, so dass die holographische Bilderkennung in vielen Bereichen z.B. der Tumorforschung und Wirkstofffindung, insbesondere bei der individualisierten Therapie, von Vorteil ist.

Die Analyse biologischer Objekte mittels Bildgebung durch DHMI erlaubt insbesondere ein Erkennen bestimmter Zellen, Zellzyklen oder Klone durch Auswertung der Morphologie, durch Auswertung einer Zellveränderung bei Setzen eines entsprechenden Stimulus oder durch Auswerten des Verhaltens einzelner Zellen auf unterschiedlichem Untergrund oder Beschichtungen eines Zellkulturgefäßes oder Objektträgers.

Die vorliegende Erfindung wird nachfolgend unter Bezugnahme auf die Zeichnung anhand bevorzugter Ausführungsbeispiele erläutert.
Fig. 1 zeigt eine schematische Darstellung eines rechnergestützten Laser-Mikroskopiesystems mit DHMI-Bildgebung gemäß einem bevorzugten Ausführungsbeispiel der Erfindung,
Fig. 2 zeigt eine beispielhafte Visualisierung einer Zelle mittels DHMI, wie sie beispielsweise bei dem in Fig. 1 gezeigten Laser-Mikroskopiesystem erfolgen kann, und
Fig. 3 zeigt Darstellungen der in Fig. 2 gezeigten Zelle vor und nach einer Mikroinjektion.

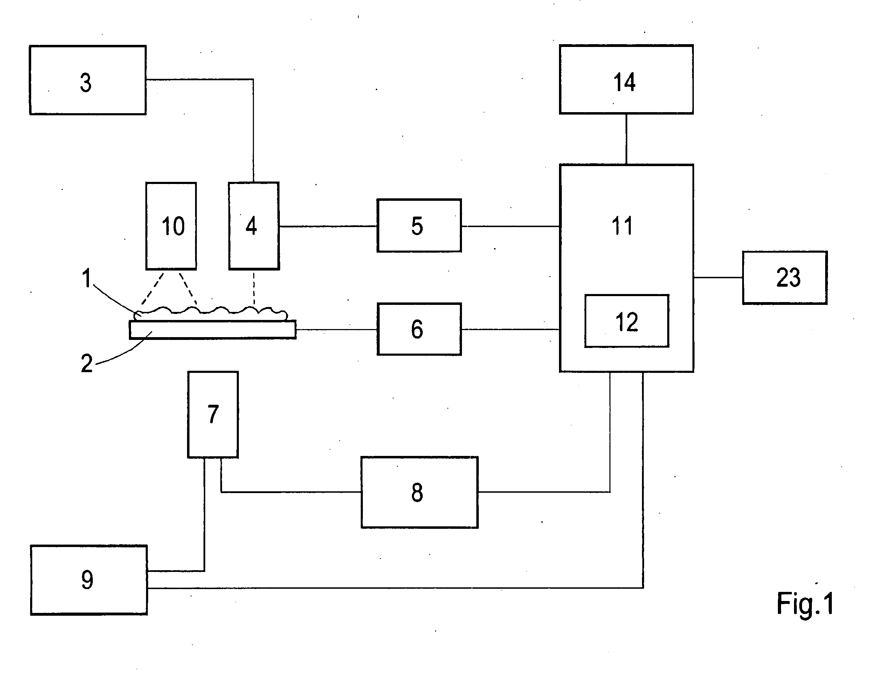

In Fig. 1 ist ein Laser-Mikroskopiesystem mit DHMI-Bildgebung dargestellt, so dass das System auch als digital-holographisches Laser-Mikroskopiesystem bezeichnet werden kann.

Das in Fig. 1 gezeigte System umfasst einen auch als "Stage" bezeichneten Mikroskoptisch 2, welcher einen (nicht explizit gezeigten) Objektträger mit einem darauf befindlichen biologischen Material 1 trägt. Des Weiteren umfasst das System eine Laserlichtquelle 3, wobei ein Laserstrahl über eine Optik 4 z.B. mit einem polarisierenden Strahteiler zur Strahlumlenkung und einen Kondensor auf das biologische Material gerichtet wird. Handelt es sich bei dem Laser-Mikroskopiesystem um eine so genannte Optische Pinzette, dient der Laserstrahl zum Halten und Transportieren einzelner biologischer Objekte, im Fokus des Laserstrahls. Ebenso kann der Laserstrahl auf bekannte Art und Weise zur Mikroinjektion verwendet werden. Schließlich kann mit Hilfe des Laserstrahl auch ein gewünschtes biologisches Objekt von dem umgebenden biologischen Material 1 abgetrennt und mittels eines auf das biologische Objekt gesetzten separaten Laser-Schusses zu einer (nicht gezeigten) Auffangvorrichtung befördert werden. Für das nachfolgend näher beschriebene Prinzip einer DHMI-Bildgebung spielt die konkrete Ausgestaltung des Laser-Mikroskopiesystems keine besondere Rolle. Vielmehr lässt sich das Grundprinzip der DHMI-Bildgebung auf alle Laser-Mikromanipulations- und Laser-Mikrodissektionsverfahren anwenden, wobei dies insbesondere rechnergestützte Verfahren betrifft.

Der Laserstrahl und der Mikroskoptisch können rechnergestützt über entsprechende Verstelleinheiten 5, 6 beliebig positioniert und verfahren werden, wobei auf diese Weise insbesondere eine exakte Relativbewegung des Laserstrahl gegenüber dem Mikroskoptisch 2 und dem darauf befindlichen biologischen Material 1 möglich ist.

Das Laser-Mikroskopiesystem umfasst ein Objektiv 7, wobei eine digitale Videokamera 8 über das Objektiv 7 ein Bild des auf dem Objektträger befindlichen biologischen Materials 1 aufnimmt und entsprechende Bilddaten einer Steuereinheit 11 zur Wiedergabe auf einem Bildschirm oder Monitor 14 zuführt. Bei der Steuereinheit handelt es sich in der Regel um einen herkömmlichen Personal Computer mit entsprechender Software zur automatisierten Durchführung des Laser-Mikromanipulations- oder Laser-Mikrodissektionsvorgangs. Entsprechend können Eingabemittel 13, wie z.B. eine Tastatur oder Computer-Maus, zur Interaktion mit einem Benutzer vorgesehen sein. Mit Hilfe einer geeigneten Bildanalysesoftware kann das auf dem Bildschirm 14 dargestellte Bild des biologischen Materials einer automatischen Bildanalyse unterzogen werden, um beispielsweise automatisch zu dissektierende Zelle des biologischen Materials 1 zu erkennen.

Das in Fig. 1 gezeigte Laser-Mikroskopiesystem umfasst des Weiteren ein DHMI-Modul 9, welches eine Visualisierung des auf dem Objektträger befindlichen biologischen Materials mittels DHMI-Technologie erzeugt und entsprechende Bilddaten an die Steuereinheit zur Wiedergabe auf dem Bildschirm 14 ausgibt.

Die DHMI-Technologie erlaubt eine dreidimensionale quantitative Bildgebung des biologischen Materials, wobei beispielsweise ein selektives Erkennen einzelner biologischer Objekte, z.B. Zellen, mittels vorgegebener Kriterien möglich ist, wobei die Erkennung auch mit Hilfe der Bildanalysesoftware 12 automatisch durchgeführt werden kann.

Insbesondere ist ein Erkennen durch Auswertung der Morphologie mit folgenden Varianten möglich:
a) Erkennen und Bestimmen des Zellzyklus: Zellen sind vor der Metaphase abgerundet, was durch Auswertung der Zellenform mittels DHMI ermittelt werden kann. Ebenso kann der Einfluss von Wirkstoffen auf den Zellzyklus beobachtet werden.
b) Zellendifferenzierung: Stammzellen werden therapeutisch zur Behandlung verschiedener Krankheiten eingesetzt. Diese multipotenten bzw. totipotenten Zellen können die verschiedensten Gewebetypen bilden, die in der Transplantationsmedizin Einsatz finden, wie z.B. Herzmuskelgewebe oder Neuronen. Hier ist jedoch darauf zu achten, dass nur die ausdifferenzierten Zellen verwendet werden, da nicht ausdifferenzierte Zellen im Patienten krebsartig wuchern und so genannte Teratome bilden können.
c) Zellzucht und Klonieren: In der Gewebezucht sollte eine gewisse Zelldichte eingehalten werden. Durch das dreidimensionale DHMI-Verfahren lassen sich überlagernde Zellen schnell erkennen. Insbesondere lassen sich bildende Klone sehr schnell erkennen und somit zur Bildung einer reinen Kultur isolieren. Insbesondere bei der Stammzellenzucht ist es wichtig, einerseits gezielt pluripotente Zellen aus Stammzellkulturen zu erkennen und zu isolieren und andererseits noch undifferenzierte Stammzellen aus differenzierten Kulturen zu eliminieren.
d) Gewinnen von Tumorzellen aus Primärkulturen (z.B. Biopsat oder Blut): Zur Zucht von Tumorzellen können beispielsweise Biopsate für die individualisierte Medizin aufgereinigt werden. Hier ist die Gewinnung reiner Tumorzellen oft durch die hohe Konzentration an anderen primären Zellen (z.B. Fibroblasten) erschwert. Mit Hilfe der DHMI-Bildanalyse können hochreine Tumorzellkulturen gewonnen werden.
e) Isolieren und Gewinnen von embryonalen Zellen: Vorläuferzellen der Erythrocyten (so genannte Normoblasten) können beispielsweise aus dem Blut schwangerer Frauen oder aus dem Abstrich vom Gebärmutterhals zur Pränataldiagnostik gewonnen werden, was ebenfalls durch die DHMI-Bildanalyse erleichtert wird.
f) selektives Erkennen und Zerstören kranker Zellen: Es können beispielsweise Tumorzellen aus einem Knochenmarksaspirat (o.ä.) gezielt erkannt und zerstört werden, z.B. bei Patienten, die nach einer Chemotherapie wieder eigene Stammzellen eingesetzt bekommen. Aber auch bei Knochenmarkspendem müssen die geeigneten Zellen gezielt gewonnen werden, was durch die DHMI-Erkennung bzw. DHMI-Kontrolle unterstützt wird.
g) Erkennen, Beobachtung und kinetische Verfolgung der Apoptose: Zellen, die in Apoptose gehen, ändern ihre Morphologie - es kommt zu einem Abflachen oder zu einer Abrundung der Außenform oder einer Bläschenbildung. Ebenso tritt ein Einfahren der Peudopodien u.ä. auf, was durch Auswertung des DHMI-Bildes leicht zu erkennen bzw. zu analysieren ist. Die apoptotischen Zellen können zur Analyse mit geeigneten Wirkstoffen angereichert werden, um die Ursache der Apoptose zu ermitteln bzw. einen Wirkstoffeinfluss zu testen.

Daneben ist mittels der DHMI-Bildanalyse auch ein Erkennen durch Auswertung der Zellveränderung möglich. Hierzu kann ein gezielter Stimulus gesetzt werden, auf den unterschiedliche Zelltypen unterschiedlich reagieren. Als chemische Stimuli sind Zellgifte, Trypsin o.ä. denkbar. Darüber hinaus können als Stimuli auch Ultraschall, niederfrequente oder hochfrequente Strahlung und elektromagnetische Wellen eingesetzt werden.

Eine weitere Möglichkeit der Erkennung mittels DHMI-Analyse ist die Auswertung des Verhaltens unterschiedlicher Zellen auf unterschiedlichem Untergrund bzw. unterschiedlichen Beschichtungen eines Zellkulturgefäßes oder Objektträgers, wobei das Rollverhalten, die Absiedlung und das Migrationsverhalten der einzelnen Zellen in dem DHMI-Bild ausgewertet werden können.

Ein weiterer wesentlicher Vorteil der DHMI-Bildgebung ist die Kombination mit Laser-Mikromanipulationsverfahren und Laser-Mikrodissektionsverfahren, um insbesondere eine automatische Durchführung dieser Verfahren zu unterstützen bzw. zu ermöglichen.

Wie beschrieben worden ist, können durch Auswertung des DHMI-Bildes Zellen oder auch Zellkerne erkannt werden. Dies kann vorteilhafterweise dazu genutzt werden, um einzelne zu bearbeitende Zellen beispielsweise für eine automatische Mikroinjektion rechnergestützt zu positionieren. Gleiches gilt selbstverständlich auch für die Laser-Mikrodissektion, um selektierte Zellen nach deren Erkennen für einen Laser-Mikrodissektionsvorgang gezielt zu positionieren.

Ebenso kann mit Hilfe der DHMI eine Online-Kontrolle eines Mikroinjektionsvorgangs durchgeführt werden, da durch Überwachung und Auswertung des DHMI-Bildes mögliche Zellreaktionen auf den jeweiligen Mikroinjektionsschuss oder auch die sich dabei ergebende Lochgröße ermittelt werden können. Durch Rückmeldungen an die Steuereinheit 11 (vgl. Fig. 1) können abhängig von dem Auswertungsergebnis beispielsweise die Laserparameter entsprechend nachgeregelt werden (bei einem zu großen Loch kann z.B. die Laserenergie reduziert werden).

Ebenso ist es möglich, während einer Mikroinjektion eine sich daraufhin einstellende Form-, Dicke- oder Volumenänderung der jeweiligen Zelle quantitativ zu messen bzw. zu erfassen. Hierdurch wird eine quantitative Online-Prozesskontrolle bei der Mikroinjektion ermöglicht, welche mit anderen Verfahren nicht auf einfache und markerfreie Weise erzielt werden kann. Dies soll nachfolgend näher erläutert werden.

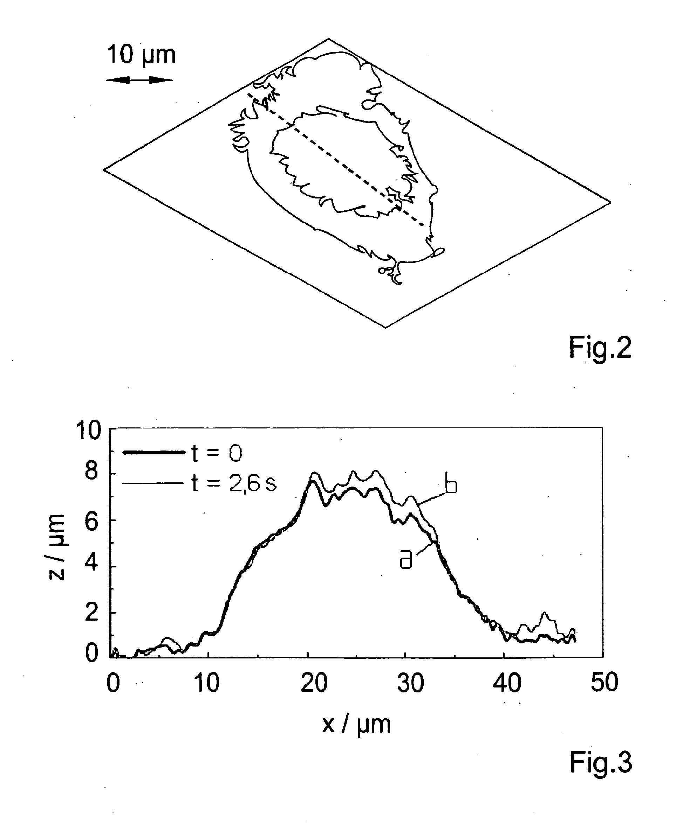

Fig. 2 zeigt ein Beispiel für eine dreidimensionale DHMI-Visualisierung einer Zelle bei Verwendung eines 100x-Objektivs.

Fig. 3 zeigt Darstellungen der Kontur der Zelle entlang einer in Fig. 2 gestrichelt dargestellten Schnittlinie während eines Mikroinjektionsvorgangs (die z-Achse stellt die Höhenrichtung der Zelle dar, während die x-Achse der horizontalen Richtung entlang der in Fig. 2 dargestellten Schnittlinie entspricht), wobei die Kurve a die Kontur zu einem Zeitpunkt t=0 vor der Mikroinjektion und die Kurve b die Kontur zu einem Zeitpunkt t=2,6s nach der Mikroinjektion darstellt. Aus einem Vergleich der beiden Kurve von Fig. 3 ist ersichtlich, wie sich das Volumen (bzw. in Fig. 3 die Höhe entlang der z-Achse) der Zelle verändert, was durch Auswertung des DHMI-Bildes einfach überwacht werden kann.

Unabhängig von dem Anwendungsbereich der Laser-Mikroinjektion können mit Hilfe der DHMI einfach Form- oder Volumenänderungen biologischer Objekte erkannt werden.

Ebenso ist beispielsweise eine Kopplung der DHMI-Analyse mit optischen Pinzetten vorteilhaft.

Dies ermöglicht z.B. eine minimal invasive Analyse der Elastizität von Einzelzellen. Die Zellen werden mit Hilfe der optischen Pinzette gedehnt; die Kraft hierfür kann z. B. über theoretische Berechnungen abgeschätzt werden. Die DHMI ermöglicht hierbei gleichzeitig die Bestimmung der Veränderung der Dicke/Form der Zellen. (vgl. die vorhergehenden Erläuterungen zu Fig. 2 und Fig. 3). Damit kann die Elastizität der Zellen ortsaufgelöst bestimmt/analysiert werden. Dies ist insbesondere für eine markerfreie Erkennung von Tumorzellen von Bedeutung, da Tumorzellen eine von "gesunden Zellen" verschiedene Elastizität aufweisen.

Ein weiter Vorteil der digitalen Holographie ist bei dieser Anwendung, dass es möglich ist, nachträglich die Probe zu fokussieren, da dynamische Bewegungen der untersuchten Zellen insbesondere bei Einsatz der optischen Pinzette in Verbindung mit hoher Vergrößerung (z. B. 100x-Objektiv) oft eine Positionierung außerhalb der Fokusebene bewirken. Dies kann durch den Einsatz der DHMI online oder nachträglich digital aus vorhandenen Messdaten kompensiert werden.

Ein weiterer Anwendungsbereich der DHMI-Bildanalyse von biologischen Objekten ist das Sortieren und Gewinnen von einzelnen Zellen aus einem Zellverbund, wobei dieses Verfahren wiederum vollautomatisch durchgeführt werden kann.

Wie bereits beschrieben worden ist, können mittels DHMI-Bildanalyse allgemein individuelle Zellen in einem Zellgemisch erkannt werden, was zur Sortierung von Zellen aus einem adhärentem Zellrasen genutzt werden kann. So können beispielsweise differenzierte Stammzellen in einem inhomogenem Zellgemisch identifiziert und anschließend mittels z.B. Laser-Mikrodissektion isoliert werden, wobei dieser Vorgang rechnergestützt und vollautomatisch ablaufen kann. Ebenso können einfach Klone erkannt und über Volumenbestimmung Größe bzw. Anzahl der Zellen im jeweiligen Klon bestimmt werden.

Ebenso ist mittels DHMI-Bildanalyse einfach das Erkennen von schnell wandernden Zellen möglich, d.h. es können mittels DHMI auch die Kinetik von biologischen Objekten erfasst und ausgewertet werden. Bei der Wundheilung sind die schnellen Zellen wertvolle Untersuchungsobjekte für die Pharmaindustrie. In der Tumorforschung sind die schnell wandernden Zellen als sehr aggressiv bekannt. Auch diese lassen sich mittels DHMI isolieren und für Pharmatests bereitstellen

Die DHMI kann auch zum Sortieren von Zellen aus einer Suspensionskultur genutzt werden, wobei einzelne Zellen in einer Suspensionskultur durch DHMI-Bildanalyse erkannt und anschließend mit Hilfe einer Optischen Pinzette gefangen und bewegt werden können.

Ein wesentlicher Vorteil der Verwendung der DHMI ist die bereits zuvor beschriebene Möglichkeit der Prozesskontrolle.

Schnell und dadurch insbesondere ohne nennenswerte Belastung durch langwierige "Bestrahlung", wie z.B. beim Laser Scanning Mikroskop (LSM), können lebende Zellen sowohl qualitativ als auch quantitativ durch "Momentaufnahmen" erfasst werden. Von besonderem Vorteil ist es, dass keine umständliche bzw. langwierige Fokusnachstellung notwendig ist, da selbst aus "Außerfokusbildern" per Software ein scharfes Fokusbild errechnet und dargestellt werden kann.

Dadurch lassen sich unterschiedliche Prozesse in der Zellbearbeitung, Zellzucht und/oder Zellgewinnung automatisieren. Ein Anwendungsbeispiel ist die bereits erwähnte automatische Mikroinjektion, wobei ein Zellkembereich einer Zelle mittels DHMI erkannt und anschließend in die Schusslinie des Lasers gebracht werden kann. Der Bereich des Zellkerns ist bei adhärent wachsenden Zellen immer erhaben, d.h. nach außen gewölbt. Genau da muss die Mikroinjektion stattfinden, wenn "Material" direkt in den Zellkern verbracht werden soll - oder genau da nicht, wenn die Injektion in das umliegende Zytoplasma verbracht werden soll. Sobald der Mikroinjektionsschuss automatisch ausgelöst worden ist, können mittels DHMI Vergleiche der Volumina vor und nach der Mikroinjektion ermittelt und somit die Volumenzunahme/Volumenänderung berechnet werden. Bei zu starker Laserenergie wird die Zelle zerstört. Auch das kann durch die DHMI-Aufnahme ermittelt werden. Es ist vorteilhaft, wenn bei positiver Volumenänderung die Koordinaten abgespeichert werden, so dass ein weiteres Anfahren der injizierten Zelle nach einer gewissen Zeit wieder möglich ist. Idealerweise sollten dann Aufnahmen jeder individuellen Zelle als separate Filmsequenz erstellt werden. Nach bestimmter Zeit können alle injizierten Zellen mittels Laser-Mikrodissektion ausgeschnitten und isoliert/katapultiert werden.

Ein weiteres Ausführungsbeispiel für die Verwendung der DHMI-Bildanalyse in Verbindung mit biologischen Objekten ist ein Zellzucht- und/oder Zellisolationsautomat.

Zum einen kann die DHMI-Bildanalyse als Prozesskontrolle ermitteln, in welchem Zustand (locker bewachsen oder dicht bewachsen) sich eine Zellkultur befindet. Zum anderen kann die DHMI-Bildanalyse den Zellteilungszustand oder auch ein Zellabsterben kontrollieren und somit einen Feedback zum "Handeln" an den Automaten geben wie z.B. in Form einer Anweisung "Medium wechseln", "Zellkultur teilen "usw. (dies gilt allgemein für die Zellzucht).

Insbesondere bei Stammzellen treten Klone auf. Hier können z.B. mit einem Übersichtsobjektiv interessante Areale (Zellklone, d.h. Zellansammlungen) gefunden und deren Höhe vermessen werden. Dadurch wird eine automatische Zellzahlermittlung möglich, wobei die Koordinaten festgehalten werden können. Die einzelnen Klone können dann mit einer Linie rechnergestützt auf dem wiedergegebenen Bild umzeichnet und somit auf dem Bildschirm gekennzeichnet werden. Anschließend können diese Areale entweder komplett ausgeschnitten und katapultiert werden oder aber in Aliquots bestimmter Größe aufgeteilt und dann katapultiert werden. Falls in einer ausdifferenzierten Zellkultur immer noch Klone wachsen, d.h. Zellen noch pluripotent sind, können diese gezielt und zuverlässig aus der Zellkultur eliminiert werden (z.B. mittels Laserablation oder Laser-Mikrodissektion), da diese ein großes Risiko von Krebsentwicklung haben.

## Patentansprüche

1. Verfahren zur Analyse eines biologischen Objekts,
wobei mittels digitaler holographischer Mikrointerferometrie (DHMI) ein DHMI-Bild des zu analysierenden biologischen Objekts aufgenommen wird, und
wobei das biologische Objekt durch Auswertung des DHMI-Bilds analysiert wird, **dadurch gekennzeichnet,**
**dass** das DHMI-Bild des biologischen Objekts während der Durchführung eines berührungslosen Laser-Mikromanipulationsvorgangs, eines berührungslosen Laser-Mikroinjektionsvorgangs oder eines berührungslosen Laser-Mikrodissektionsvorgangs aufgenommen und zur Kontrolle des jeweiligen Vorgangs ausgewertet wird.

2. Verfahren nach Anspruch 1,
**dadurch gekennzeichnet,**
**dass** mittels der digitalen holographischen Mikrointerferometrie ein dreidimensionales DHMI-Bild des zu analysierenden biologischen Objekts aufgenommen und ausgewertet wird.

3. Verfahren nach Anspruch 1 oder 2,
**dadurch gekennzeichnet,**
**dass** durch Auswertung des DHMI-Bilds auf biologische Eigenschaften des biologischen Objekts geschlossen wird.

4. Verfahren nach einem der vorhergehenden Ansprüche,
**dadurch gekennzeichnet,**
**dass** das biologische Objekt durch Auswertung seiner Morphologie in dem DHMI-Bild analysiert wird.

5. Verfahren nach Anspruch 4,
**dadurch gekennzeichnet,**
**dass** das biologische Objekt durch Auswertung seiner Form oder seines Volumens in dem DHMI-Bild analysiert wird.

6. Verfahren nach Anspruch 4 oder 5,
**dadurch gekennzeichnet,**
**dass** mittels der digitalen holographischen Mikrointerferometrie ein DHMI-Bild von einer Zelle aufgenommen wird und das DHMI-Bild (a) zur Erkennung des Zellzyklus, (b) zur Identifizierung des Zelltyps, oder (c) zur Erkennung eines Zustands der Zelle analysiert wird.

7. Verfahren nach einem der Ansprüche 1-6,
**dadurch gekennzeichnet,**
**dass** mittels der digitalen holographischen Mikrointerferometrie ein DHMI-Bild eines Zellengemisches aufgenommen wird und das DHMI-Bild (a) zum selektiven Erkennen einzelner Zellen in dem Zellengemisch, (b) zum Bestimmen der Zelldichte in dem Zellengemisch, (c) zum Bestimmen der Zellanzahl in dem Zellengemisch oder (d) zur Bestimmung von Klonen in dem Zellengemisch analysiert wird.

8. Verfahren nach einem der vorhergehenden Ansprüche,
**dadurch gekennzeichnet,**
**dass** vor Aufnahme des DHMI-Bilds das biologische Objekt mit einem chemischen, optischen oder elektromagnetischen Stimulus angeregt wird, um anschließend durch Auswertung des darufhin aufgenommenen DHMI-Bilds die Reaktion des biologischen Objekts auf den Stimulus zu analysieren.

9. Verfahren nach einem der vorhergehenden Ansprüche,
**dadurch gekennzeichnet,**
**dass** das biologische Objekt mit Hilfe einer Optischen Pinzette gedehnt und durch Auswertung des dabei aufgenommenen DHMI-Bilds das biologische Objekt hinsichtlich seiner biologischen Eigenschaften analysiert wird.

10. Verfahren nach einem der vorhergehenden Ansprüche,
**dadurch gekennzeichnet,**
**dass** abhängig von dem Ergebnis der Analyse des DHMI-Bilds das biologische Objekt einem berührungslosen Laser-Mikromanipulationsvorgang, einem berührungslosen Laser-Mikroinjektionsvorgang oder einem Laser-Mikrodissektionsvorgang unterzogen wird.

11. Verfahren nach Anspruch 10,
**dadurch gekennzeichnet,**
**dass** das biologische Objekt durch Auswertung des DHMI-Bilds zur Durchführung des Laser-Mikromanipulationsvorgangs, Laser-Mikroinjektionsvorgangs oder des Laser-Mikrodissektionsvorgangs automatisch positioniert wird.

12. Verfahren nach einem der vorhergehenden Ansprüche,
dass durch Auswertung des DHMI-Bilds das biologische Objekt hinsichtlich seiner Reaktion auf den jeweiligen Vorgang analysiert wird.

13. Verfahren nach einem der vorhergehenden Ansprüche,
**dadurch gekennzeichnet,**
**dass** das Verfahren rechnergestützt durchgeführt wird.

14. Verfahren nach einem der vorhergehenden Ansprüche, **dadurch gekennzeichnet,**
**dass** die Auswertung des DHMI-Bilds zur Analyse des biologischen Objekts automatisch durchgeführt wird.

15. Vorrichtung zur Analyse eines biologischen Objekts,
mit einer Trägereinrichtung (2) zum Halten des biologischen Objekts (1),
mit einer Einrichtung zur Durchführung der digitalen holographischen Mikrointerferometrie (DHMI) (9) zum Aufnehmen eines DHMI-Bilds des biologischen Objekts (1),
mit einer Bildwiedergabeeinrichtung (14) zum Wiedergeben des DHMI-Bilds des biologischen Objekts, und
mit einer Laser-Mikromanipulationseinrichtung, einer Laser-Mikroinjektionsvorrichtung oder einer Laser-Mikrodissektionsvorrichtung (3, 4),
**dadurch gekennzeichnet,**
**dass** die DHMI-Einrichtung (9) zum Aufnehmen des DHMI-Bilds des biologischen Objekts während der Durchführung eines Laser-Mikromanipulationsvorgangs, eines Laser-Mikroinjektionsvorgangs oder eines Laser-Mikrodissektionsvorgangs ausgestaltet ist und das von der DHMI-Einrichtung (9) aufgenommene DHMI-Bild zur Kontrolle des jeweiligen Vorgangs auswertbar ist.

16. Vorrichtung nach Anspruch 15,
**dadurch gekennzeichnet,**
**dass** die Vorrichtung eine Steuereinrichtung (11) zur Ansteuerung der Laser-Mikromanipulationseinrichtung, der Laser-Mikroinjektionsvorrichtung oder der Laser-Mikrodissektionsvorrichtung (3, 4) umfasst.

17. Vorrichtung nach Anspruch 16,
**dadurch gekennzeichnet,**
**dass** die Steuereinrichtung (11) derart ausgestaltet ist, dass sie die Laser-Mikromanipulationseinrichtung, die Laser-Mikroinjektionsvorrichtung oder die Laser-Mikrodissektionsvorrichtung (3, 4) automatisch abhängig von der Analyse des DHMI-Bilds ansteuert.

18. Vorrichtung nach einem der Ansprüche 15-17,
**dadurch gekennzeichnet,**
**dass** die Vorrichtung eine Bildanalyseeinrichtung (12) zur automatischen Analyse des DHMI-Bilds des biologischen Objekts (1) umfasst.

19. Vorrichtung nach einem der Ansprüche 15-18,
**dadurch gekennzeichnet,**
**dass** die Vorrichtung zur Durchführung des Verfahrens nach einem der Ansprüche 1-14 ausgestaltet ist.

## Claims

1. Method for analysing a biological object,
wherein by means of digital holographic microinterferometry (DHMI) a DHMI image of the biological object to be analysed is recorded, and wherein the biological object is analysed by evaluation of the DHMI image,
**characterised in that**
the DHMI image of the biological object is recorded during the performance of a contactless laser micromanipulation procedure, a contactless laser microinjection procedure or a contactless laser microdissection procedure and is evaluated in order to control the procedure in question.

2. Method according to claim 1,
**characterised in that**
by means of digital holographic microinterferometry a three-dimensional DHMI image of the biological object to be analysed is recorded and evaluated.

3. Method according to claim 1 or 2,
**characterised in that**
by evaluation of the DHMI image conclusions are drawn about biological properties of the biological object.

4. Method according to any one of the preceding claims,
**characterised in that**
the biological object is analysed by evaluation of its morphology in the DHMI image.

5. Method according to claim 4,
**characterised in that**
the biological object is analysed by evaluation of its shape or its volume in the DHMI image.

6. Method according to claim 4 or 5,
**characterised in that**
by means of digital holographic microinterferometry a DHMI image of a cell is recorded, and the DHMI image is analysed (a) to detect the cell cycle, (b) to identify the cell type, or (c) to detect a state of the cell.

7. Method according to any one of claims 1 to 6,
**characterised in that**
by means of digital holographic microinterferometry a DHMI image of a cell mixture is recorded, and the DHMI image is analysed (a) to selectively detect individual cells in the cell mixture, (b) to determine the cell density in the cell mixture, (c) to determine the cell count in the cell mixture, or (d) to determine clones in the cell mixture.

8. Method according to any one of the preceding claims,
**characterised in that**
before the DHMI image is recorded, the biological object is excited with a chemical, optical or electromagnetic stimulus in order subsequently to analyse the reaction of the biological object to the stimulus by evaluation of the DHMI image then recorded.

9. Method according to any one of the preceding claims,
**characterised in that**
the biological object is stretched by means of optical tweezers, and the biological object is analysed in respect of its biological properties by evaluation of the DHMI image thereby recorded.

10. Method according to any one of the preceding claims,
**characterised in that**
independently of the result of the analysis of the DHMI image, the biological object is subjected to a contactless laser manipulation procedure, to a contactless laser microinjection procedure or to a laser microdissection procedure.

11. Method according to claim 10,
**characterised in that**
by evaluation of the DHMI image the biological object is positioned automatically for the performance of the laser micromanipulation procedure, the laser microinjection procedure or the laser microdissection procedure.

12. Method according to any one of the preceding claims, that by evaluation of the DHMI image the biological object is analysed in respect of its reaction to the procedure in question.

13. Method according to any one of the preceding claims,
**characterised in that**
the method is carried out with computer assistance.

14. Method according to any one of the preceding claims,
**characterised in that**
the evaluation of the DHMI image for analysis of the biological object is carried out automatically.

15. Device for analysing a biological object,
having a carrier device (2) for holding the biological object (1),
having a device for carrying out the digital holographic microinterferometry (DHMI) (9) for recording a DHMI image of the biological object (1), having an image reproduction device (14) for reproducing the DHMI image of the biological object, and
having a laser micromanipulation device, a laser microinjection device or a laser microdissection device (3, 4),
**characterised in that**
the DHMI device (9) is configured to record the DHMI image of the biological object during the performance of a laser manipulation procedure, a laser microinjection procedure or a laser microdissection procedure, and the DHMI image recorded by the DHMI device (9) can be evaluated in order to control the procedure in question.

16. Device according to claim 15,
**characterised in that**
the device comprises a control device (11) for controlling the laser micromanipulation device, the laser microinjection device or the laser microdissection device (3, 4).

17. Device according to claim 16,
**characterised in that**
the control device (11) is so configured that it controls the laser micromanipulation device, the laser microinjection device or the laser microdissection device (3, 4) automatically in dependence on the analysis of the DHMI image.

18. Device according to any one of claims 15 to 17,
**characterised in that**
the device comprises an image analysis device (12) for automatically analysing the DHMI image of the biological object (1).

19. Device according to any one of claims 15 to 18,
**characterised in that**
the device is configured to carry out the method according to any one of claims 1 to 14.

## Revendications

1. Procédé d'analyse d'un objet biologique,
où une image DHMI de l'objet biologique à analyser est enregistrée par micro-interférométrie holographique numérique (DHMI), et où
l'objet biologique est analysé par évaluation de l'image DHMI,
**caractérisé en ce que** l'image DHMI de l'objet biologique est enregistrée pendant l'exécution d'une opération laser de micro-manipulation sans contact, d'une opération laser de micro-injection sans contact ou d'une opération laser de micro-dissection sans contact, et est évaluée aux fins de contrôle de l'opération correspondante.

2. Procédé selon la revendication 1,
**caractérisé en ce que** une image DHMI tri-dimensionnelle de l'objet biologique à analyser est enregistrée et évaluée par micro-interférométrie holographique numérique.

3. Procédé selon la revendication 1 ou 2,
**caractérisé en ce que** des caractéristiques biologiques de l'objet biologique sont déduites de l'évaluation de l'image DHMI.

4. Procédé selon l'une des revendications précédentes,
**caractérisé en ce que** l'objet biologique est analysé par évaluation de sa morphologie dans l'image DHMI.

5. Procédé selon la revendication 4,
**caractérisé en ce que** l'objet biologique est analysé par évaluation de sa forme ou de son volume dans l'image DHMI.

6. Procédé selon la revendication 4 ou 5,
**caractérisé en ce qu'**une image DHMI d'une cellule est enregistrée par micro-interférométrie holographique numérique et l'image DHMI (a) est analysée pour la détection du cycle cellulaire, (b) pour l'identification du type cellulaire, ou (c) pour la détection d'un état de la cellule.

7. Procédé selon l'une des revendications 1 à 6,
**caractérisé en ce qu'**une image DHMI d'un mélange de cellules est enregistrée par micro-interférométrie holographique numérique et l'image DHMI est analysée (a) pour la détection sélective de différentes cellules dans le mélange de cellules, (b) pour la détection de la densité cellulaire dans le mélange de cellules, (c) pour la détection du nombre de cellules dans le mélange de cellules ou (d) pour la détection de clones dans le mélange de cellules.

8. Procédé selon l'une des revendications précédentes,
**caractérisé en ce que** préalablement à l'enregistrement de l'image DHMI, l'objet biologique est stimulé par un stimulus chimique, optique ou électromagnétique, pour analyser ensuite la réaction de l'objet biologique au stimulus par évaluation de l'image DHMI alors enregistrée.

9. Procédé selon l'une des revendications précédentes,
**caractérisé en ce que** l'objet biologique est étiré au moyen d'une pince optique et l'objet biologique est analysé relativement à ses caractéristiques biologiques par évaluation de l'image DHMI alors enregistrée.

10. Procédé selon l'une des revendications précédentes,
**caractérisé en ce que** l'objet biologique est soumis à une opération laser de micro-manipulation sans contact, une opération laser de micro-injection sans contact ou une opération laser de micro-dissection sans contact en fonction du résultat de l'analyse de l'image DHMI.

11. Procédé selon la revendication 10,
**caractérisé en ce que** l'objet biologique est automatiquement positionné par évaluation de l'image DHMI pour l'exécution de l'opération laser de micro-manipulation, de l'opération laser de micro-injection ou de l'opération laser de micro-dissection.

12. Procédé selon l'une des revendications précédentes,
**caractérisé en ce que** l'objet biologique est analysé par évaluation de l'image DHMI relativement à sa réaction à l'opération correspondante.

13. Procédé selon l'une des revendications précédentes,
**caractérisé en ce que** l'exécution dudit procédé est assistée par ordinateur.

14. Procédé selon l'une des revendications précédentes,
**caractérisé en ce que** l'évaluation de l'image DHMI est automatiquement exécutée pour l'analyse de l'objet biologique.

15. Installation pour l'analyse d'un objet biologique,
avec un dispositif support (2) pour le maintien de l'objet biologique (1),
avec un dispositif pour l'exécution de la micro-interférométrie holographique numérique (DHMI) (9), destiné à enregistrer une image DHMI de l'objet biologique (1),
avec un dispositif de lecture d'image (14) destiné à restituer l'image DHMI de l'objet biologique, et
avec un dispositif laser de micro-manipulation, un dispositif laser de micro-injection ou un dispositif laser de micro-dissection (3, 4),
**caractérisée en ce que** le dispositif DHMI (9) est réalisé pour enregistrer l'image DHMI de l'objet biologique pendant l'exécution d'une opération laser de micro-manipulation, d'une opération laser de micro-injection ou d'une opération laser de micro-dissection, et **en ce que** l'image DHMI enregistrée par le dispositif DHMI (9) est évaluable aux fins de contrôle de l'opération correspondante.

16. Installation selon la revendication 15,
**caractérisée en ce que** ladite installation comprend un dispositif de commande (11) pour la commande du dispositif laser de micro-manipulation, du dispositif laser de micro-injection ou du dispositif laser de micro-dissection (3, 4).

17. Installation selon la revendication 16,
**caractérisée en ce que** le dispositif de commande (11) est réalisé de manière à commander automatiquement le dispositif laser de micro-manipulation, le dispositif laser de micro-injection ou le dispositif laser de micro-dissection (3, 4) en fonction de l'analyse de l'image DHMI.

18. Installation selon l'une des revendications 15 à 17,
**caractérisée en ce que** ladite installation comprend un dispositif d'analyse d'image (12) pour l'analyse automatique de l'image DHMI de l'objet biologique (1).

19. Installation selon l'une des revendications 15 à 18,
**caractérisée en ce que** ladite installation est réalisée pour exécuter le procédé selon l'une des revendications 1 à 14.
